# EUROPEAN PATENT APPLICATION

(11) **EP 1 792 803 A1**
(43) Date of publication of application: **06.06.2007**
(21) Application number: 06125157.5
(22) Date of filing: 30.11.2006
(51) Int. Cl.: B62D 5/00

(54) **Steering apparatus**

(30) Priority: 01.12.2005 JP 2005347599
(71) Applicant: NISSAN MOTOR CO., LTD., Yokohama-shi, Kanagawa 221-0023 (JP)
(72) Inventor: Chino, Naotaka c/o Nissan Technical Centre, Atsugi-shi Kanagawa 243-0192 (JP); Eguchi, Takaaki c/o Nissan Technical Centre, Atsugi-shi Kanagawa 243-0192 (JP); Kubokawa, Noriki c/o Nissan Technical Centre, Atsugi-shi Kanagawa 243-0192 (JP)
(74) Representative: Holmes, Matthew William

(57) **Abstract**

The present invention provides an automotive steer-by-wire device that reduces occurrence of mis-engagement that has plagued previous devices. The automotive steering device of the present invention is equipped with a backup unit that engages and releases an operating unit and a rotary steering unit, wherein the backup unit includes a backup clutch (9), configured by an outer ring (30), an inner ring (31), and rollers (32). The rollers (32) are provided so as work with one with a lower rotational speed between the outer ring (30) and the inner ring (31), in a state that the rollers (32) release the outer ring (30) and the inner ring (31).

## Description

The present invention relates to a steering apparatus and particularly, but not exclusively, to a steer-by-wire apparatus or system having a clutch which engages and releases an operating unit and a rotary steering unit. Aspects of the invention relate to an apparatus, to a system, to a method and to a vehicle.

Typically in steer-by-wire devices used in automobiles there must be a back-up, or redundant, mechanical system for safety. An object of some prior art references is to provide a fail safe, or redundant, mechanism of a steer-by-wire device that can generally reduce energy loss in a normal operation over previous steering mechanisms which employed wet multiple disk clutches. Typically these devices are preferred because their idling torque is less than that of a wet multiple disk clutch, and they are more compact. An automotive steering device configured as follows has been proposed in the prior art. In one example, an inner and an outer ring are provided with an electromagnetic coil. Rollers are inserted between the inner ring and outer ring and a clutch release state, which allows relative rotation of the outer ring and the inner ring, is made by retaining the roller at a neutral position when applying current to an electromagnetic coil. A clutch engagement state is made such that the rollers are wedge-engaged between the outer ring and the inner ring, by allowing the roller to come off from the neutral position when applying no current to the electromagnetic coil (see, for example, Japanese Patent Application, Laid-Open, No. 2005-8073).

However, the back-up mechanism of the known steer-by-wire device disclosed above is configured such that an inner ring is connected to the rotary shaft at the rotary steering side, and an outer ring is connected to a rotary shaft at the steering side, and the roller rotates in along with the inner ring. A disadvantage of this arrangement is that the change in a rotation angle of the inner ring is made larger than that of the outer ring at the time of releasing the clutch. For this reason, there has been the problem that mis-engagement (error engagement) of the clutch is brought about due to the inertial force (inertia) of the roller at the time of releasing the clutch.

It is an aim of the invention to address this problem and to improve upon known technology. Embodiments of the invention provide an automotive steering device which may be capable of reducing occurrence of mis-engagement of a clutch when the clutch should be released. Other aims and advantages of the invention will become apparent from the following description, claims and drawings.

Aspects of the invention therefore provide an apparatus, a method and a vehicle as claimed in the appended claims.

According to another aspect of the invention there is provided a vehicle steering system for control of steering by a driver comprising an operating unit operable by the driver, a rotary steering unit for rotating at least one wheel of the vehicle based on the movement of the operating unit, a clutch, provided between the operating unit and the rotary steering unit to mechanically engage and release the operating unit and the rotary steering unit, wherein the clutch includes an inner ring interlinked with one of the operating unit and the rotary steering unit, an outer ring interlinked with the other of the operating unit and the rotary steering unit and engagement elements provided between the inner ring and the outer ring to engage and release the inner ring and the outer ring and the engagement elements are provided so as to work with one with a lower rotational speed between the inner ring and the outer ring in a state that the engagement elements release the inner ring and the outer ring.

In an embodiment, the clutch includes an electromagnetic coil which operates the engagement elements. The outer ring may have an inner periphery formed in a cylindrical shape. The inner ring may have an outer periphery formed in a cam shape. The operating unit and the rotary steering unit may be released in such a manner that the outer ring and the inner ring are allowed to relatively rotate by retaining the engagement element at a neutral position on the basis of an operation by the electromagnetic coil, and the operating unit and the rotary steering unit are engaged in such a manner that the outer ring and the inner ring are engaged by the engagement element due to the engagement element coming off from the neutral position on the basis of an operation by the electromagnetic coil.

The system may comprise a rotor fixed to an end position of the outer ring, the rotor having a permanent magnet arranged in a field of the electromagnetic coil and wherein the clutch further includes an armature arranged to be movable in an axial direction of the rotor via a biasing spring with respect to the rotor, a plurality of engagement elements, in roller form, inserted between the outer ring and the inner ring and a ball-cage, for embedding the plurality of engagement elements into pockets and maintaining spaced intervals among the plurality of engagement elements.

In an embodiment, the clutch comprises a neutral spring for retaining the engagement elements at a neutral position in a state that the rotary steering unit is released from the operating unit.

The system may comprise bearings, disposed between a shaft member fitted into the inner ring in a serration manner and the rotor fixed to the end position of the outer ring. In an embodiment, the bearings are ball bearings.

The system may comprise a cable column provided between the operating unit and the clutch, the cable column comprising cylindrical members respectively provided to the operating unit and the clutch and an inner cable, bridged between the cylindrical members, for transmitting rotation of one of the cylindrical members to the other.

According to a further aspect of the invention there is provided an automotive steering system for control of steering by the driver, comprising operation means operable by the driver, rotary-steering means for rotating the steering control wheels, engagement means for mechanically engaging and releasing the operation means and the rotary-steering means, wherein the engagement means includes a first rotating member which rotates along with the operation means in a state that the operation means and the rotary-steering means are mechanically released, a second rotating member which rotates along with rotary-steering means in a state that the operation means and the rotary-steering means are mechanically released, excitation means for generating magnetic force for mechanically engaging and releasing the operation means and the rotary-steering means, engagement elements by which the first rotating member and the second rotating member are operated to be in a state of being engaged and in a state of being released by the excitation means and engagement elements are provided to a member with a lower rotational speed between the first rotating member and the second rotating member in a state that the operation means and the rotary-steering means are mechanically released.

According to a still further aspect of the invention there is provided a method of steering an automobile on the basis of an operation of a driver, comprising the steps of providing an operating unit operable by the driver, providing a rotary steering unit for rotating the steering control wheels based on the movement of the operating unit, providing a clutch, between the operating unit and the rotary steering unit to mechanically engage and release the operating unit and the rotary steering unit, wherein, the clutch includes; a first rotating member interlinked with the operating unit; a second rotating member interlinked with the rotary steering unit; and engagement elements provided between the first rotating member and the second rotating member to engage and release the first rotating member and the second rotating member, respectively rotating the first rotating member along with the operating unit and the second rotating member along with the rotary steering unit, providing the engagement elements so as to work one with a lower rotational speed between the first rotating member and the second rotating member which are respectively rotating.

Embodiments of the invention provide an automotive steering device equipped with a clutch that engages and releases an operating unit and a rotary steering unit. The clutch includes a first rotating member, a second rotating member, and engagement elements.

The engagement elements can engage and release the first rotating member and the second rotating member. When the engagement elements release the first rotating member and the second rotating member, the first rotating member is configured to rotate along with the operating unit and the second rotating member is configured to rotate along with the rotary steering unit. In this state, the engagement elements rotate with either the operating unit or the rotary steering unit depending on which has a lower rotational speed.

Consequently, when the engagement elements are provided so as to work with a rotating member, in a state that the engagement elements release the first rotating member and the second rotating member, the engagement members are brought to the rotating member with the lower rotational speed. For this reason, as compared with a case in which the engagement elements are provided so as to work with a rotating member with a higher rotational speed, inertial torque acting on the engagement elements when the rotating member rotates can be made lower. This makes it possible to suppress error engagement of the clutch due to the engagement elements being moved by inertial torque.

In one embodiment, an automotive steering system is provided. The steering system includes an operating unit, which is operated by the driver, a rotary steering unit that rotates the steering control wheels based on the movement of the operating unit, and a clutch provided between the operating unit and the rotary steering unit to mechanically engage and release the operating unit and the rotary steering unit.

The clutch of this embodiment includes an inner ring, interlinked with one of the operating unit and the rotary steering unit, and an outer ring, interlinked with the other of the operating unit and the rotary steering unit. Further, the clutch includes engagement elements, provided between the inner ring and the outer ring, that engage and release the inner ring and the outer ring. The engagement elements may work with either the operating unit or the rotary steering unit depending on which has a lower rotational speed, between the inner ring and the outer ring, when the engagement elements release the inner ring and the outer ring.

In another embodiment, an automotive steering system, for steering to rotate steering control wheels on the basis of an operation of a driver, is provided. The present embodiment includes operation means to be operated by the driver, rotary-steering means to rotate the steering control wheels and engagement means for mechanically engaging and releasing the operation means and the rotary-steering means. In this embodiment, the engagement means includes a first rotating member and a second rotating member, which rotate, respectively along with the operation means and the rotary steering means, when the operation means and the rotary-steering means are mechanically released and excitation means, for generating magnetic force for mechanically engaging and releasing the operation means and the rotary-steering means.

This embodiment further includes engagement elements, by which the first rotating member and the second rotating member are operated when engaged and when released by the excitation means, such that the engagement elements are provided so as to work with the member with the lower rotational speed as between the first rotating member and the second rotating member when the operation means and the rotary-steering means are mechanically released.

A method of operation is also contemplated in the present invention. In the method for steering, that is to rotate steering control wheels on the basis of an operation of a driver, when the operating unit is operated by the driver, and rotary steering unit for rotating the steering control wheels, the method includes, respectively, rotating a first rotating member along with the operating unit and a second rotating member along with the rotary steering unit. In such a case, the engagement elements, which are provided so as to work the member having the lower rotational speed, as between the first rotating member and the second rotating member, engage and release the first rotating member and the second rotating member by excitation means for generating magnetic force, and engage and release the operating unit and the rotary steering unit.

Within the scope of this application it is envisaged that the various aspects, embodiments and alternatives set out in the preceding paragraphs, in the claims and in the following description may be taken individually or in any combination thereof.

The present invention will now be described, by way of example only, with reference to the accompanying drawings in which:
FIG. 1 is an overall block diagram showing a steer-by-wire system to which an automotive steering device of a first embodiment is applied;
FIG. 2 is a vertical cross-sectional view showing a backup clutch in the automotive steering device of the first embodiment;
FIG. 3 is a diagram showing a mechanical clutch unit of the backup clutch in the automotive steering device of the first embodiment;
FIG. 4 is a diagram showing a mechanism in which mis-engagement is brought about during clutch release in the backup clutch;
FIG. 5 is a vertical cross-sectional view showing a backup clutch in an automotive steering device of a second embodiment;
FIGS. 6A to 6D are respectively a pulley plan view, a pulley side view, a pulley front view, and a regulatory member perspective view, each showing a cable end supporting structure in the cable-type steering device of the third embodiment; and
FIGS. 7A to 7D are respectively a pulley plan view, a pulley side view, a pulley front view, and a regulatory member perspective view, each showing a cable end supporting structure in a cable-type steering device of a fourth embodiment.

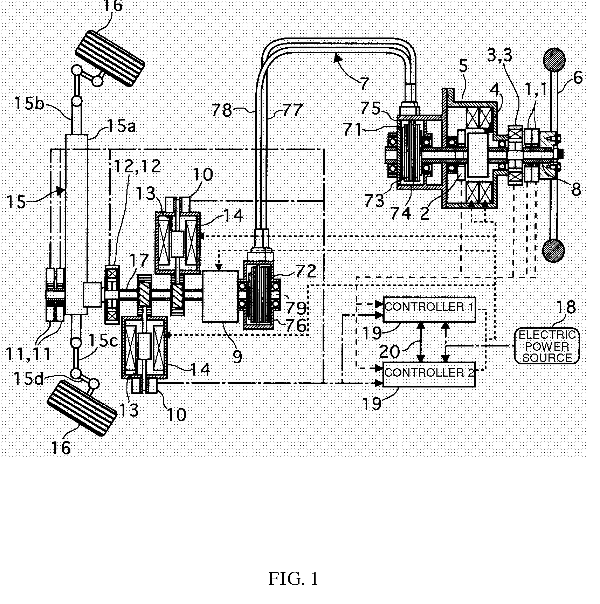

FIG. 1 is an overall block diagram showing a steer-by-wire system (hereinafter called "SBW system") to which an automotive steering device of a first embodiment is applied.

The SBW system to which the automotive steering device of the first embodiment is applied is configured by (1) an operating device (operating unit), (2) a backup device (backup unit), (3) a rotary steering device (rotary steering unit), and (4) a controller. Hereinafter, respective configurations thereof will be described in detail.

The operating device is configured to include rudder angle sensors 1, an encoder 2, torque sensors 3, a hall IC 4, a reactive force motor 5, and a steering wheel 6.

The rudder angle sensors 1 are means for detecting an operational angle of the steering wheel 6 operated by a driver, and the sensors are provided to a column shaft 8 for coupling a cable column 7 to be described later and the steering wheel 6. A system for detecting an operational angle of the steering wheel 6 is configured by a double system with two rudder angle sensors 1. Then, the rudder angle sensors 1 are arranged between the steering wheel 6 and the torque sensors 3, and are capable of detecting a steering angle so as to be free of the influence of an angular change due to distortion of the torque sensors 3. As the rudder angle sensors 1 absolute type resolvers or the like are used.

The torque sensors 3 are arranged between the rudder angle sensors 1 and the reactive force motor 5, and are composed of a double system with two torque sensors 3. The torque sensors 3 are configured to have, for example: a torsion bar elongated in an axial direction; a first shaft interlinked to one end of the torsion bar to be coaxial to the torsion bar; a second shaft interlinked to the other end of the torsion bar to be coaxial to the torsion bar and the first shaft; a first magnetic body fixed to the first shaft; a second magnetic body fixed to the second shaft; a coil facing the first magnetic body and the second magnetic body; and a third magnetic body which forms a magnetic circuit along with the first magnetic body and the second magnetic body so as to surround the coils. Then, with respect to the aforementioned coil, an inductance is changed in accordance with a relative displacement between the first magnetic body and the second magnetic body based on distortion acting on the torsion bar, and torque is detected by an output signal based on the inductance.

The reactive force motor 5 is a steering reactive force actuator which applies a reactive force to the steering wheel 6. The reactive force motor 5 is composed of a one-rotor/one-stator electric motor with the column shaft 8 being as a rotary shaft, and a casing thereof is fixed to a proper position of a vehicle body. As the reactive force motor 5, a brushless motor is used, and the encoder 2 and the hall IC 4 are added in accordance with the use of the brushless motor. In that case, motor driving that generates motor torque is possible even only by the hall IC 4. However, slight torque fluctuations are brought about, which deteriorates steering reactive force feeling. Thus, in order to carry out finer and smoother reactive force control, the encoder 2 is mounted on the shaft of the column shaft 8, and motor control is carried out, which reduces slight torque fluctuations, and achieves improvement in the steering reactive force feeling. It will be understood, by persons having ordinary skill in the art that a resolver, or any device capable of fulfilling this function, may be used in place of the encoder 2 without departing from the novel scope of the present invention.

A backup device (that is a built in redundancy), capable of mechanically engaging and releasing the operating device and the rotary steering device, includes cable column 7 and a backup clutch 9.

The cable column 7 is a mechanical backup mechanism that exerts a column shaft function of transmitting torque even while going around bends so as to avoid the interference with members interposed between the operating device and the rotary steering device, in a backup mode in which the backup clutch 9 is engaged. The cable column 7 is configured such that two inner cables 73 and 74, having cable ends fixed to pulleys 71 and 72, are wound in directions opposite to each other around the two pulleys 71 and 72.Further, both ends of outer tubes 77 and 78, having the two inner cables 73 and 74 interpolated therein, are fixed to two pulley casings 75 and 76. In the figures reference numeral 79 is a pulley shaft.

The rotary steering device includes encoders 10, rudder angle sensors 11, torque sensors 12, a hall IC 13, rotary steering motors 14, a steering mechanism 15, and steering control wheels 16.

The rudder angle sensors 11 and the torque sensors 12 are provided on a shaft of a pinion shaft 17. The aforementioned backup clutch 9 is attached to one end of the pinion shaft 17, and a pinion gear is formed at the other end. Absolute type resolvers, or the like, are used as rudder angle sensors 11. Such absolute type resolvers form a double system in the same manner as the rudder angle sensors 1, and detect the number of revolutions of the pinion shaft 17. Further, as torque sensors 12, devices are employed that form a double system, in the same manner as the torque sensors 3(described above), and that detect torque on the basis of a change in inductance. The rudder angle sensors 11 are arranged at the downstream side via the pinion gear (not shown), and the torque sensors 12 are arranged at the upstream side, which permits the system to be free of the influence of an angular change due to distortion of the torque sensors 12 at the time of detecting a rotary steering angle by the rudder angle sensors 11.

The rotary steering motors 14 are configured to apply rotary steering torque to the pinion shaft 17. The configuration is made such that the motor shaft is provided with a pinion gear that meshes with a worm gear, provided at an intermediate position between the backup clutch 9 and the torque sensors 12, on the pinion shaft 17. The rotary steering motors 14 form a double system that serves as a brushless motor, constituting a first rotary steering motor 14 and a second rotary steering motor 14. As in the case of the reactive force motor 5, the encoders 10, and the hall IC 13 are added in accordance with the use of the brushless motor.

The steering mechanism 15 rotary-steers the left and right steering control wheels 16 by rotation of the pinion shaft 17. The steering mechanism 15 includes: a rack shaft 15b, interpolated in a rack tube 15a and having formed thereon a rack gear which meshes with the pinion gear of the pinion shaft 17; tie rods 15c, interlinked with the both ends of the rack shaft 15b elongated in the horizontal direction of the vehicle; and knuckle joints 15d, each having one end interlinked with the tie rods 15c, and the other end interlinked with the steering control wheels 16.

With respect to the controller, a double system is configured by two controllers 19 for executing an algorithm, arithmetic processing or the like, by an electric power source 18, such as a microprocessor or the like.

The controller 19 receives detected values from the rudder angle sensors 1, the encoder 2, the torque sensors 3, and the hall IC 4 of the operating device, and the encoders 10, the rudder angle sensors 11, the torque sensors 12, and the hall IC 13 of the rotary steering device.

The controller 19 has a fault diagnosis unit. The fault diagnosis unit performs fault diagnosis of rotary steering control and reactive force control in steer-by-wire control (hereinafter called "SBW control") by disengagement of the clutch, fault diagnosis in electric power steering control (hereinafter called "EPS control"), which assists torque control by clutch connection, and transition control from the "SBW control" to the "EPS control" at the fault diagnoses.

The controllers 19 each have not only the fault diagnosis unit, but also a reactive force command value computing unit, a reactive force motor driving unit, an operating device current sensor, a rotary steering command value computing unit, a rotary steering motor driving unit, a rotary steering device current sensor, and a controller diagnosis unit. Controllers 19 are connected so as to exchange information with each other via a two-way communication line 20.

It will be understood that sensor information from a yaw rate/sideward gravitation sensor (not shown), a speed sensor for detecting the speed of the vehicle, a reactive force motor temperature sensor for detecting a temperature of the reactive force motor 5, and the like are input to the both controllers 19.

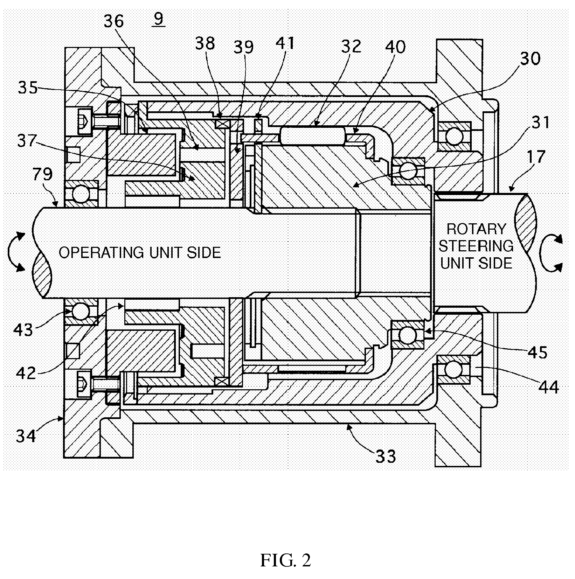

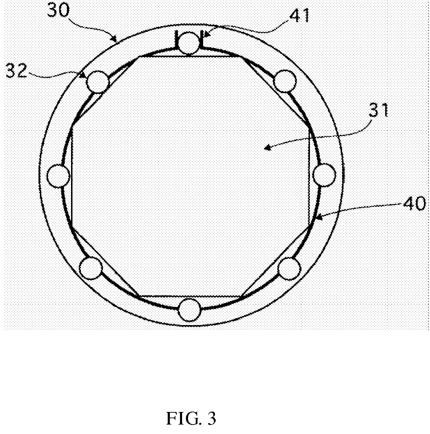

FIG. 2 is a cross-sectional view showing a backup clutch in the automotive steering device of the first embodiment, and FIG. 3 is a diagram showing a mechanical clutch unit (engagement means) of the backup clutch in the automotive steering device of the first embodiment. First, the SBW system, to which the automotive steering device of the first embodiment is applied, will be described. As shown in FIG. 1, the backup device has a backup clutch 9, which engages and releases the operating device and the rotary steering device, at the rotary steering device side.

The backup clutch 9 has: an outer ring 30 (a second rotating member); an inner ring 31 (a first rotating member); an electromagnetic coil 35 and a rotor 37 (excitation means) which generate magnetic force; and rollers 32, a ball-cage 40, and a neutral spring 41 (engagement means) which are operated by the electromagnetic coil 35 and the rotor 37, to serve as a mechanical clutch unit for engaging and releasing the outer ring 30 and the inner ring 31. These rollers 32, the ball-cage 40, and the neutral spring 41 are provided to the inner ring 31 which rotates along with the operating device. In other words, the rollers 32, the ball-cage 40, and the neutral spring 41 are provided to a ring having the lower rotational speed as between the inner ring 31 and the outer ring 30. The inner ring 31 is connected to the pulley shaft 79 of the backup device rotating along with the operating device, and rotates along with the operating device. The outer ring 30 is connected to the pinion shaft 17 of the rotary steering device, and rotates along with the pinion shaft 17.

The pulley shaft 79 is fitted into the inner ring 31 in a serration manner. In addition, the pinion shaft 17 of the rotary steering device is fitted into the outer ring 30 in a serration manner.

As shown in FIG. 3, the outer ring 30 has an inner periphery formed in a cylindrical shape, and the inner ring 31 has an outer periphery formed in a cam shape (an octagon). The mechanical clutch unit has the rollers 32 (engagement elements) inserted between the outer ring 30 and the inner ring 31.

The backup clutch 9 is designed to be released by making an electric current flow in the electromagnetic coil 35. More specifically, an electric current is made to flow into the electromagnetic coil 35, whereby magnetic force of a permanent magnet 36 is offset by magnetic force of the electromagnetic coil 35. Consequently, the rollers 32 are regulated at a neutral position, i.e., the rollers 32 are retained at the neutral position, and relative rotation of the outer ring 30 and the inner ring 31 is allowed to release the rotary steering device from the operating device. In contrast the backup clutch 9 is engaged when no electric current is made to flow into the electromagnetic coil 35. In such a case, the rollers 32 are not regulated at the neutral position by magnetic force of the permanent magnet 36, i.e., the rollers 32 are allowed to be released from the neutral position, so that a clutch engagement state is established in which the rollers 32 are wedge-engaged between the outer ring 30 and the inner ring 31.

The electromagnetic coil 35 is, as shown in FIG. 2, fixed to an end plate 34 (clutch case member) of a clutch case 33. The rotor 37 is fixed so as to be fitted into an end position of the outer ring 30 in a serration manner, and has the permanent magnet 36 arranged in the field of the electromagnetic coil 35.It will be understood that with the configuration of arranging the permanent magnet 36 in the field of the electromagnetic coil 35, it is possible to apply an in-phase or a reversed phase magnetic flux to a magnetic flux of the permanent magnet 36 by means of the electromagnetic coil 35.

The mechanical clutch unit has, as shown in FIG. 2, an armature 39 arranged to be movable in the axial direction via a biasing spring 38 with respect to the rotor 37; a plurality (eight) of rollers 32 serving as engagement elements inserted between the outer ring 30 and the inner ring 31; and a ball-cage 40, which embeds the plurality of rollers 32 into pockets, and retains intervals among the plurality of rollers 32 at a set interval of equal length. It will be seen that the ball-cage 40 is supported so as to be movable in the rotation direction with respect to the inner ring 31. As shown in FIG. 3, the neutral spring 41, for holding one roller 32 at a neural position at the time of releasing the clutch, is provided to the backup clutch 9. The neutral spring 41 provides a return spring force to return the wedge-engaged rollers 32 to the neutral position, during transition between engagement and release of the clutch. It will be seen that the neutral spring 41 is fixed to the inner ring 31.

Needle bearings 42 (bearings) are provided between the pulley shaft 79 (shaft member), fitted into the inner ring 31 in a serration manner, and the rotor 37 fixed to the end position of the outer ring 30.In FIG. 2, first ball bearings 43 support the pulley shaft 79 onto the end plate 34. Second ball bearings 44 support the outer ring 30 onto the clutch case 33. Third ball bearings 45 are inserted between the outer ring 30 and the inner ring 31.

Should the reactive force motor 5 fail in the SBW system (Steer-by-wire System), reactive force control is cancelled, the steering wheel 6 and the steering control wheels 16 are mechanically interlinked with each other by the backup clutch 9, serving as a backup mechanism, and rotation of the steering wheel 6 is transmitted to the pinion shaft 17. With respect to rotary steering control, the rotary steering motor 14 is controlled in the same manner as a steering auxiliary control in a typical electric power-assist steering device.

At the time of engagement of the backup clutch 9, there is no magnetic force produced by the electromagnetic coil 35; that is when an OFF command is issued to the electromagnetic coil 35. For this reason, the magnetic force of the permanent magnet 36 applied to the rotor 37 is made stronger than the spring force of biasing spring 38 applied to the rotor 37 and the armature 39. As a consequence, the armature 39 is attracted to the rotor 37, and the armature 39 and the rotor 37 rotate integrally while retaining frictional force. The ball-cage 40 is rotated by the rotation of the armature 39, and the rollers 32 rotate so as to be against the spring force of the neutral spring 41. Then, the outer ring 30 and the inner ring 31 are wedge-engaged with each other via the rollers 32, so that torque is transmitted.

At the time of releasing the backup clutch 9, the electromagnetic coil 35 generates magnetic force which offsets the magnetic force of the permanent magnet 36 when an ON command is issued to the electromagnetic coil 35. For this reason, the force of repulsion of the biasing spring 38, applied onto the armature 39, overcomes the magnetic force of the permanent magnet 36, thereby separating the rotor 37 and the armature 39. Concomitantly, the wedge-engaged portion incorporates the neutral spring 41 for retaining the rollers 32 at the neural position. Consequently, when frictional force between the rotor 37 and the armature 39 disappear, the rollers 32 return to the neural position by action of the return spring force of the neutral spring 41; such that the wedge-engagement by the roller 32 is cancelled thereby releasing the clutch. With such a configuration, it is possible to satisfy simultaneously two performances required of the backup clutch 9 of the SBW system, that is, insuring fail safe by engaging the clutch during power-OFF, and reducing the play at small/large torque conditions and during engagement.

In the backup clutch 9 (with the wedge-engagement structure), however, the armature, the rollers, and the ball-cage, which rotate in subordination to the inner ring 31, have mass. Thus, when the inner ring 31 is rotated during clutch release, inertial torque is generated. In the prior art, the inner ring is interlinked with the rotary shaft so as to rotate along with the rotary steering device, and the outer ring is interlinked with the rotary shaft so as to rotate along with the operating device.

Consequently, for example, in variable gear ratio control executed during clutch release, where the inner ring and the outer ring are separated away from each other, a rotational speed of the inner ring may be faster than that of the outer ring when a change in a rotary (pinion-side) steering angle is larger than a change in steering wheel (pulley-side) steering angle. For this reason, inertial torque is made larger, which expands the neutral spring for retaining the roller at the neutral position; so that the rollers and the ball-cage move from the neutral position to the engaging position and can be wedge-engaged by mistake (mis-engaged).Also, in some modes, such as variable gear ratio control, the steering device side and the rotary steering device side move around in phase while maintaining a speed difference. As a consequence, when mis-engagement of the backup clutch is brought about, the variable gear ratio is changed to a mechanical gear ratio, which temporarily reduces a change in a rotary steering angle. As a result, there exists a problem in that a driver feels an insufficiency in a quantity of rotary steering.

With respect to the above-descried conventional problem, the automotive steering device of the first embodiment reduces occurrence of mis-engagement of the backup clutch 9 during clutch release; that is, when the outer ring 30 and the inner ring 31 are decoupled from each other. As a consequence, an attempt can be made to prevent the uncomfortable feeling for a driver, and to stabilize vehicle behavior at the time of mis-engagement. Hereinafter, a mis-engagement reducing operation, during clutch release in the vehicle steering device in the first embodiment, will be described.

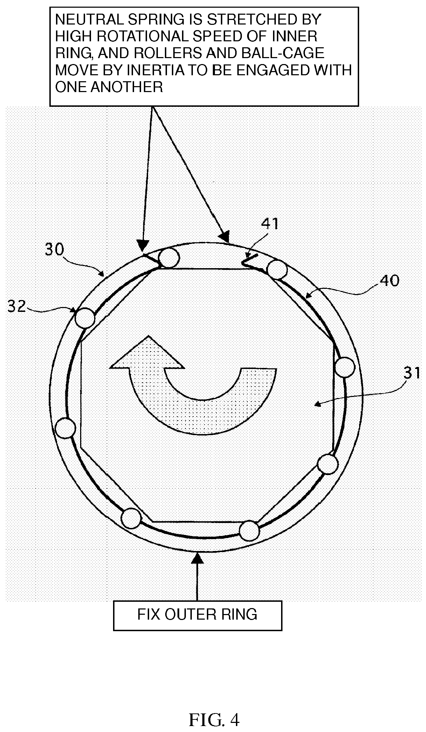

Mis-engagement during clutch release depends on inertia of the rollers 32 or the like retained by the neutral spring 41 during clutch release. When inertial torque generated by rapid acceleration/deceleration is larger than the spring force of the neutral spring 41, the rollers 32 move from the neutral position to the engaging position, which is the cause of mis-engagement (refer to FIG. 4).

More specifically, focusing on a point that the mechanical clutch unit (the ball-cage 40, the rollers 32 and the armature 39) has inertia causing mis-engagement, and a point that mis-engagement is brought about by rapid acceleration/deceleration, the mechanical clutch unit in these situations is engaged with the inner ring 31. At such occurrences, the inner ring 31 rotates selectively with the one operating device (of the two) whose change in a rotation angle is the lesser. As a result, it is possible to reduce mis-engagement during clutch release.

For example, when the mechanical clutch is engaged with a rotating member that has a larger change in a rotation angle, the frequency that a change in a rotation angle is made large is increased during clutch release. Thus, when a change in a rotation angle is made large, mis-engagement may be brought about by inertial torque. In contrast thereto, in the first embodiment, the mechanical clutch unit is engaged with the inner ring 31 having the smaller change in a rotation angle, which makes it possible to reduce occurrence of mis-engagement of the backup clutch 9. Consequently, an attempt can be made to prevent the uncomfortable feeling for a driver, or to stabilize the vehicle's behavior. It is to be understood that, in the variable gear ratio control, the angular acceleration of the rotary steering device becomes about five times as fast as the angular acceleration of the steering device. However, when the mechanical clutch unit is engaged with the inner ring 31, rotating along with the operating device, having a smaller change in a rotation angle it is possible to suppress mis-engagement during clutch release.

For example, when gear ratio control, for making a steering gear ratio that is a variable gear ratio and depending on the vehicle speed, is executed as the SBW control, a steering gear ratio is made larger in proportion as a vehicle speed is lower. Namely, in normal driving, the driving frequency at low speed compared to medium speed is overwhelmingly higher, and in this case, a change in a rotation angle of the operating unit is small, while a change in a rotation angle of the rotary steering unit is made larger.

In contrast thereto, in the first embodiment, the mechanical clutch unit is engaged with the inner ring 31, which rotates along with the operating device, whereby it is possible to reduce occurrence of mis-engagement of the backup clutch 9 during clutch release when gear ratio control is executed as the SBW control.

In the automotive steering device of the first embodiment, needle bearings 42 are provided between the pulley shaft 79 of the operating device; which is fitted into the inner ring 31 in a serration manner, and the rotor 37 fixed to the end position of the outer ring 30. More specifically, because the needle bearings 42 are provided between the pulley shaft 79 (the inner ring 31 side) and the rotor 37 (the outer ring 30 side), the outer ring 30 and the inner ring 31 are in a state that the both ends thereof are supported by the needle bearings 42 at the operating unit side, and the third ball bearings 45 at the rotary steering unit side. Consequently, it is possible to reduce an axial shift, between the rotary shaft of the inner ring 31 and the rotary shaft of the outer ring 30 due to an angle at which the backup clutch 9 is mounted; and to reduce an axial shift between both the rotary shafts due to vehicle vibration or the like. This shows an effect that a clearance between the outer ring 30 and the inner ring 31 is retained at constant regardless of the angle at which the backup clutch 9 is mounted, as well as oscillatory input, and the like. Accordingly, it is possible to reduce mis-engagement of the backup clutch 9 during clutch release.

In second embodiment deep-grooved ball bearings are employed in place of the needle bearings in the first embodiment.

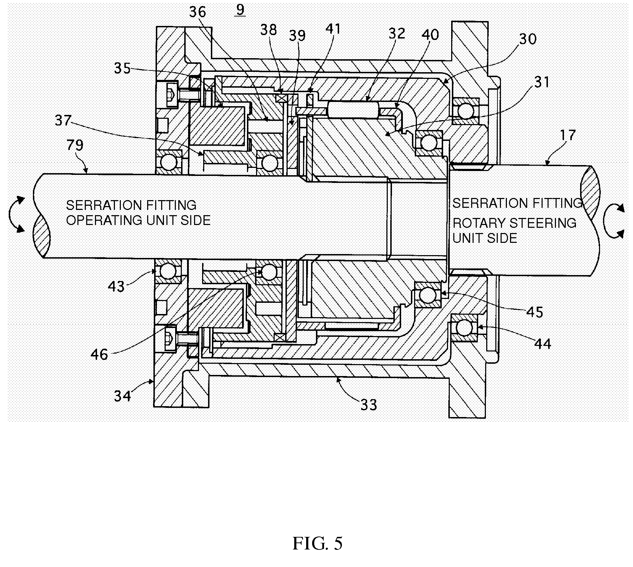

First, the configuration will be described. As shown in FIG. 5, the bearings provided, between the pulley shaft 79 of the operating device (which is fitted into the inner ring 31 in a serration manner), and the rotor 37 fixed to the end portion of the outer ring 30 are deep-grooved fourth ball bearings 46. Persons having ordinary skill in the art will see that the remaining configurations are similar to those described in the description of the first embodiment, and that therefore their description will be omitted here. Reference is made to the discussion above.

Next, to describe the operation, the automotive steering device of the second embodiment employs the deep-grooved fourth ball bearings 46 in place of the needle bearings 42 with large radial plays.

Namely, because the deep-grooved fourth ball bearings 46 are provided between the pulley shaft 79 (the inner ring 31 side) and the rotor 37 (the outer ring 30 side), the outer ring 30 and the inner ring 31 are in a state that both ends thereof are supported so as to suppress the radial plays by the fourth ball bearings 46 (at the operating unit side), and the third ball bearings 45 (at the rotary steering unit side). Consequently, it is possible to further reduce an axial shift, between the rotary shaft of the inner ring 31 and the rotary shaft of the outer ring 30, due to an angle at which the backup clutch 9 is mounted, as compared with the case in the first embodiment. Also, an axial shift between both, due to vehicle vibration or the like, is reduced more than the case in the first embodiment. This shows an effect that a clearance between the outer ring 30 and the inner ring 31 is retained to be constant regardless of an angle at which the backup clutch 9 is mounted, oscillatory input, and the like. Accordingly, during clutch release mis-engagement of the backup clutch 9 is reduced more than the case of the first embodiment; and it is possible to further reduce mis-engagement. Persons having ordinary skill in the art will see that the remaining configurations are similar to those described in the description of the first embodiment, and that therefore their description will be omitted here. Reference is made to the discussion above. [0048]

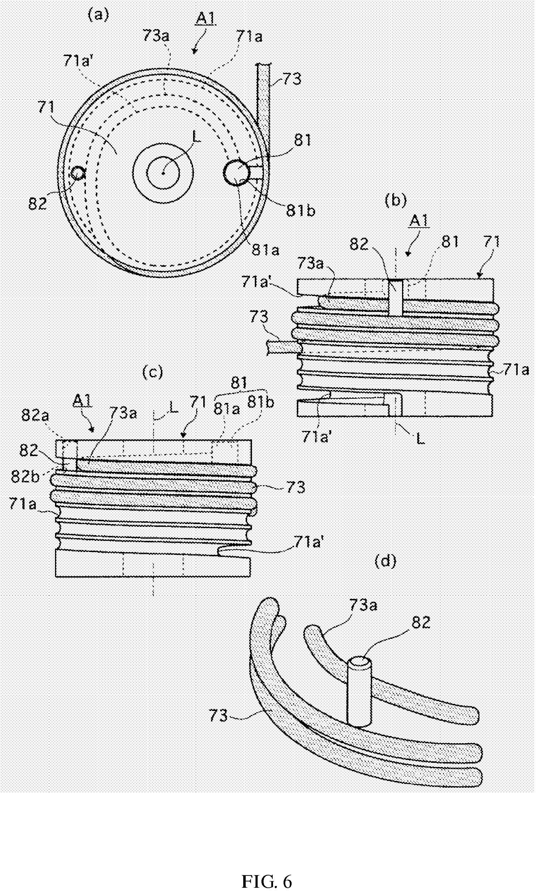

FIGS. 6A to 6D are respectively a pulley plan view, a pulley side view, a pulley front view, and a regulatory member perspective view, each showing a cable end supporting structure in a cable-type steering device of a third embodiment. First, in the third embodiment, a cable-type steering device is used as a backup mechanism of the SBW system as shown in FIG. 1. In the cable-type steering device, a driving pulley and a driven pulley rotate freely in a same direction along with the operation of turning a steering wheel 6 left and right. In addition, two inner cables 73 and 74 are respectively pulled and then relaxed by the rotations of pulleys 71 and 72. Both ends of the inner cables 73 and 74 are respectively fixed to both the driving and driven pulleys.

It will be seen that, when the steering wheel 6 is turned all the way from the neutral position, the pulley 71 at the operating device side is a driving pulley, and the pulley 72 at the rotary steering device side is a driven pulley. Further, when the steering wheel 6 returns to the neutral position, by self-aligning torque generated on the steering control wheels 16,from the state in which the steering wheel 6 is turned all the way without holding the steering wheel 6 or the like, the pulley 72 at the rotary steering device side is a driving pulley, and the pulley 71 at the operating device side is a driven pulley. Hereinafter, it will be understood that the pulleys 71 and 72 have a similar configuration to each other. A cable end supporting structure for the one pulley 71 shown in FIG. 6 will now be described.

The cable-type steering device of the third embodiment has a cable end supporting structure A1 that supports a cable end 73a of the inner cable 73 on pulley 71 (cylindrical member). The cable-type steering device has a configuration in which the inner cable 73 is wound up, along a winding groove 71a formed in a spiral shape on the outer periphery of the pulley 71, when the cable end 73a rotates; centering on a rotary shaft L of the pulley 71 supporting the cable end 73a.

In the cable end supporting structure A1, a regulatory member 82 (regulatory member) is provided at a position at a distance of half round (that is at 180 degrees) of the pulley, along the winding groove 71a from a fixing unit 81 of the cable end 73a, and the inner cable 73 is made to abut on the winding groove 71a by the regulatory member 82. Here, the fixing unit 81 is constituted in such a manner that a pin 81a is fixed to the cable end 73a by, for example, casting or caulking or the like into a pin hall 81b formed on the end face of the pulley 71, in the direction of the rotary shaft L.

Further, it will be understood that the position at which the regulatory member 82 is set should be a position at which the frictional forces between the inner cable 73 (from the fixing unit 81 of the cable end 73a to the regulatory member 82), and the winding groove 71a (on which the inner cable 73 abuts) can oppose the tensile force when the inner cable 73 is wound up. In the third embodiment, for example, this position is defined at a distance of about half round (about 180 degrees) along a winding deep groove portion 71a', with a deep groove depth, from the fixing unit 81.

The regulatory member 82 is arranged opposite, at a position in the outer diameter direction at a distance corresponding to a cable diameter, from the winding groove 71a. The inner cable 73 is caused to abut-on, so as to be trapped onto the winding groove 71a by the regulatory member 82.

In the pulley 71, a groove depth of the winding deep groove portions 71a', from the fixing unit 81 of the cable end 73a at least up to the position at which the regulatory member 82 is set in the winding groove 71a formed on the outer periphery, is set to be deeper than a groove depth of the other portion of the winding groove 71a.

In the third embodiment, as shown in FIG. 6A, a distance of about 1/4 round (about 90 degrees) is set, until a depth returns gradually to an original groove depth from the position of the winding deep groove portion 71a', at which the regulatory member 82 has been set. Consequently, grooves of about 3/4 round (about 270 degrees) among at least the first grooves from the top and bottom surfaces of the pulley 71, are set as the winding deep groove portions 71a' formed from grooves deeper than a groove depth at the central portion.

The regulatory member 82 is inserted into the end face of the pulley 71, from the direction of the rotary shaft L to pass through the winding deep groove portion 71a', thereby being set in the pulley 71. More specifically, a through-hall 82a passing through the regulatory member 82 is formed in the pulley 71, and a bottomed hall 82b is formed at a position at which the winding deep groove portion 71a' is passed through. Then, the regulatory member 82 is defined as a cylindrical pin member set in the pulley 71.

In the steer-by-wire system, a cable system backup mechanism is used. The cable system backup mechanism is configured such that, if the reactive force motor 5 fails, reactive force control is cancelled, and the steering wheel 6 and the steering control wheels 16 are mechanically interlinked with one another via the cable column 7, serving as a backup mechanism by engaging the backup clutch 9. In addition, the rotation of the steering wheel 6 is transmitted to the pinion shaft 17, which makes it possible to rotate the steering control wheels 16.

In the cable-type steering device, when the steering wheel 6 is operated to turn, for example, to the right, the driving pulley 71 rotates in the same direction; such that the inner cable 73 at one side is wound-up pulling the driven pulley 72 to the right. Simultaneously, the other inner cable 74 is relaxed, and is wound around the driven pulley 72. Consequently, the rack shaft 15b of the steering mechanism 15 is slid to the left, so that the steering control wheels 16 are steered to rotate to the right. Concomitantly, when the steering wheel 6 is operated to turn to the left, the steering control wheels 16 can be steered to rotate to the left by an operation opposite to the above-described operation.

Then, proportionately as the steering wheel 6 is operated, to turn to a left or right maximum rotational position, the driving pulley 71 and the driven pulley 72 also rotate freely in the same direction. With the rotation of these pulleys 71 and 72, the respective inner cables 73 and 74 are respectively pulled and then relaxed such that the one inner cable 73 is further relaxed from the driven pulley 72 to be wound around the driving pulley 71, and at the same time, the other inner cable 74 is further relaxed from the driving pulley 71 to be wound around the driven pulley 72.

In Japanese Patent Application Laid-Open No. 10-059195, an inner cable is always wound around a pulley two or more turns when the inner cable is wound around a winding groove of the pulley. In addition, frictional force is applied between the inner cable and the pulley, which prevents excessive loads from being applied on a pin fixing a portion of the inner cable, the pin, and the pulley even when a steering wheel reaches a left or right maximum rotational position. Further, the present invention is configured such that, when the steering wheel is operated to turn to a direction opposite to a left or right maximum rotational position, the inner cable is prevented from lifting from the winding groove of the pulley, and from failing to be wound around the pulley along the winding groove.

Because the inner cable is always wound around the pulley two or more turns, however, the entire length of the pulley in the axial direction is made longer, which brings about enlargement in size of the pulley. In addition, the entire length of the inner cable is also made longer by a length of winding margin, which brings about an increase in weight.

With respect to the above-described conventional problem, the cable-type steering device of the third embodiment is configured such that, while an attempt is made to miniaturize the pulley 71 and to save weight thereof, the inner cables 73 and 74 are prevented from lifting from the winding groove 71a of the pulley 71, which makes it possible to achieve the increase of durability and the securement of smooth winding operability. Hereinafter, description will be given to an operation for reduction in size and weight, an assembly operation, and an operation of preventing the inner cables from lifting in the cable-type steering device of the third embodiment.

In the cable-type steering device of the third embodiment, a cable end supporting structure A1 is employed in which the regulatory member 82 is provided at a position at a distance of half round (about 180 degrees) of the pulley along the winding groove 71a, from the fixing unit 81 of the cable end 73a, and the inner cable 73 is made to abut on the winding groove 71a by the regulatory member 82.

Therefore, in the cable-type steering device of the third embodiment, there is no need, unlike the prior art, to wind the inner cable around the pulley always two or more turns at a side to relax the inner cable as well. It will be seen that windings of half round, of the pulley at a position at which the regulatory member 82 is set, is sufficient. For this reason, the entire length of the pulley 71, in the axial direction, is made shorter, and an attempt can be made to miniaturize the pulley 71. Advantageously, the entire lengths of the inner cables 73 and 74 are also made shorter, whereby the weight thereof can be reduced.

The inner cable 73 is assembled onto the pulley 71 in the following manner. That is, the pin 81a fixed to the cable end 73a is fixed to the pin hall 81b formed at the end face of the pulley 71, and thereafter, the inner cable 73 is wound along the winding deep groove portion 71a' with a deep groove depth and the winding groove 71a, which are formed on the outer periphery of the pulley 71. Then, the regulatory member 82, serving as a regulatory member, is inserted into the through-hall 82a formed at the end face of the pulley 71, from the direction of the rotary shaft L, is made to pass through the winding deep groove portion 71a', and is further inserted into the bottomed hall 82b. The above-described assembly provides the effect of applying contact force to the inner cable 73, by the regulatory member 82, such that the inner cable 73 is made to contact the winding deep groove portion 71a' at a minimum winding position of the inner cable; and the inner cable 73 is thereby prevented from lifting from the winding deep groove portion 71a'.

The inner cable 73 is wound around the pulley 71, or relaxed from the pulley 71, by rotation to right and left of the pulley 71, which freely rotates in subordination to the steering wheel 6. Then, when the steering wheel 6 is at a left or right maximum rotational position, the inner cable 73, at a relaxing side, is wound around the pulley 71. The number of windings of the inner cable is a minimum (half round, about 180 degrees, of the pulley) from the fixing unit 81 of the cable end 73a. Accordingly, even if the steering wheel 6 reaches a maximum rotational position, the regulatory member 82 ensures that the inner cable 73 is wound around the pulley 71 always over half round (about 180 degrees) of the pulley, which makes it possible to prevent the inner cable 73 from lifting from the winding groove 71a. It will be understood that a portion from the half round which is the minimum number of winding up to 3/4 round of the pulley has a different diameter so as to match to a diameter of the other groove. Because a speed ratio varies as a diameter changes, rotary steering control is performed while leaving the 3/4 round.

In addition, the inner cable 73 is prevented from lifting, whereby it is also possible to prevent the inner cable 73 (at the relaxing side) from failing to be wound around the pulley 71 as the steering wheel 6 returns to the neutral position. As a result, it is possible to prevent the inner cable 73 from being made easy to damage, for example, because the inner cable 73 contacts the inner face of the pulley casing 75 of the pulley 71. Advantageously, it is also possible to prevent the inner cable 73 from failing to be wound along the winding groove 71a of the pulley 71.

Moreover, in the above-described case, from the fixing unit 81 of the cable end 73a up to a position of the number of winding the inner cable, to a minimum (half round of the pulley), frictional force applied between the inner cable 73 and the winding deep groove portion 71a' support the tensile force of the inner cable 73 at the relaxing side. Consequently, excessive loading is not applied on the inner cable 73, the pin 81a of the cable end 73a, and the pin hall 81b of the pulley 71, which prevent deterioration of the inner cable 73 and the pulley 71. Because the regulatory member 82 is a cylindrical pin member that has little frictional force with the inner cable 73, it is possible to keep the outer surface of the inner cable 73 from being damaged. Further, because the regulatory member 82 is firmly fixed to the pulley 71, the regulatory member 82 can apply sufficient contact force to the inner cable 73 such that the inner cable 73 is prevented from lifting.

As described above, in the cable-type steering device of the third embodiment, the cable end supporting structure A1 is configured such that the regulatory member 82 is at a position half round (about 180 degrees) of the pulley, along the winding groove 71a from the fixing unit 81 of the cable end 73a. The inner cable 73 is made to abut on the winding groove 71a by the regulatory member 82. Consequently, in the above-described operation a reduction in size and weight can be realized while the operation of preventing the inner cable from lifting is achieved. While it is possible to miniaturize the pulley 71, and thereby reduce weight, the inner cables 73 and 74 can be prevented from lifting out of the winding groove 71 a making it possible to achieve greater durability and smooth winding operability. [0067]

More specifically, in the third embodiment, the position at which the regulatory member 82 is set is defined as a position at a distance of half round (about 180 degrees) of the pulley along the winding groove 71a from the fixing unit 81. This leads to an optimum position at which both of the application of frictional force for supporting the tensile force of the inner cable 73, and the reduction in size and weight of the pulley 71 are satisfied.

In the cable-type steering device of the third embodiment, the described regulatory member 82 is the one arranged opposite a position in the outer diameter direction at a distance corresponding to a cable diameter from the winding groove 71a. The inner cable 73 is made to abut-on so as to be trapped in the winding groove 71a by the regulatory member 82. For example, if the regulatory force, allowing the inner cable to abut-on the winding groove by the regulatory member, is weak, then it will be generally impossible to prevent the inner cable from lifting from the winding groove in the case where there is an excessive input over the regulatory force from the inner cable. In contrast thereto, in the third embodiment, the regulatory member 82 applies contact force to the inner cable 73, and achieves a regulatory operation by abutting against the cable to prevent such lifting. Thus, the regulatory member 82 can certainly prevent the inner cable 73 from lifting away from the winding groove 71a even if there is an excessive input from the inner cable 73.

In the cable-type steering device of the third embodiment, the pulley 71 is configured such that a groove depth of the winding deep groove portion 71a', from the fixing unit 81 of the cable end 73a at least up to a position at which the regulatory member 82 is set in the winding groove 71a formed on the outer periphery, is set so as to be deeper than a groove depth of the other portion of the winding groove 71a. For example, assume that an attempt is made to provide a regulatory member for regulating the inner cable from lifting by abutting the regulatory member against the cable onto a pulley on which a winding groove with a current same diameter has been formed. In this case, in order to insure a space for setting the regulatory member it is necessary to enlarge parts of or the entire circumferences of the outer diameters of the top and bottom portions of the pulley. In contrast thereto, in the third embodiment, a groove depth of the winding deep groove portions 71a' from the fixing unit 81 of the cable end 73a, at least up to a position at which the regulatory member 82 is set, is set to be deeper than a groove depth of the other portion of the winding groove 71a, whereby the regulatory member 82 can be set without changing the outer diameter of the pulley 71. As a result, even if the regulatory member 82 of the third embodiment is employed there is no need to change the designs of the pulley casings 75 and 76.

In the cable-type steering device of the third embodiment, the regulatory member 82 is inserted into the end face of the pulley 71 from the direction of the rotary shaft L to pass through the winding deep groove portions 71a', thereby being set in the pulley 71. For example, when the regulatory member is made to be a separate unit member having a pin member fixed in advance to a bracket thereof, and this is fixed to the pulley by screw clamp or the like, the number of components is increased, which leads to cost increase, and decreases efficiency in assembly. In contrast thereto, in the third embodiment, the regulatory member 82 can be set in the pulley 71 by being inserted therein. Thereby, it is possible to obtain low-cost and favorable assembling workability while retaining fixing intensity for applying sufficient contact force.

In the cable-type steering device of the third embodiment, the regulatory member 82 is a cylindrical pin member set in the pulley 71. For example, assume that a first regulatory member is a polygonal-columnar pin member. In this case, when contact force is applied to the inner cable, friction is made larger by contact of the corner portions, and the outer surface of the inner cable can be damaged in some cases. In contrast thereto, in the third embodiment, the regulatory member 82 is a cylindrical pin member. As a consequence, even if contact force is frequently applied to the inner cable 73, it is possible to prevent the outer surface of the inner cable 73 from being damaged.

A fourth embodiment is an example in which a regulatory member, for tying up an inner cable at a contact position with respect to a winding groove, is used as a regulatory member 83.

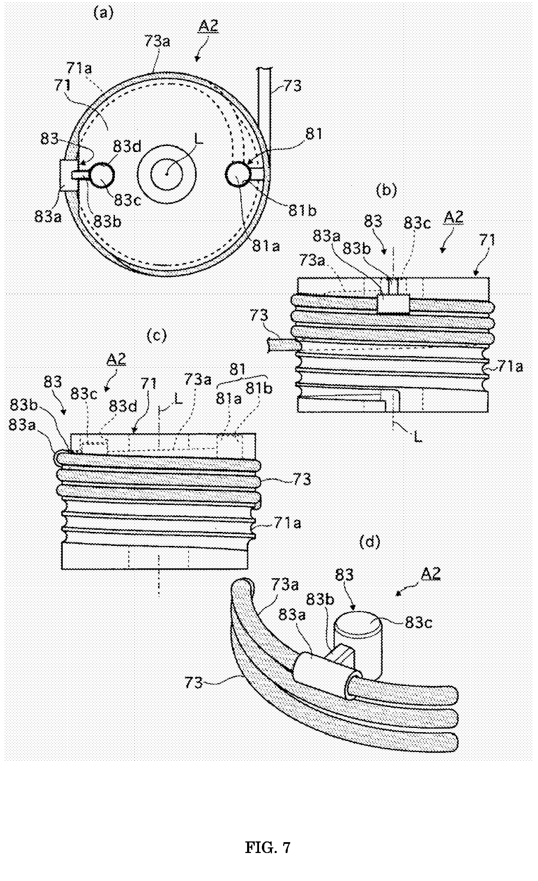

FIGS. 7A to 7D are respectively a pulley plan view, a pulley side view, a pulley front view, and a regulatory member perspective view, each showing a cable end supporting structure in a cable-type steering device of the fourth embodiment.

The cable-type steering device of the fourth embodiment has a cable end supporting structure A2 which supports a cable end 73a of an inner cable 73 onto a pulley 71 (cylindrical member). The cable-type steering device has a configuration in which the inner cable 73 is wound up along a winding groove 71 a, formed in a spiral shape on the outer periphery of the pulley 71, when the cable end 73a rotates centering on the rotary shaft L of the pulley 71 supporting the cable end 73a.

In the cable end supporting structure A2, a regulatory member 83 (regulatory member) is provided at a position at a distance of half round (about 180 degrees) of the pulley along the winding groove 71a, from a fixing unit 81 of the cable end 73a, and the inner cable 73 is made to abut on the winding groove 71a by the regulatory member 83. Here, a position at which the regulatory member 83 is set is a position at a distance of a minimum length of winding the inner cable, at which frictional force of supporting the tensile force of the inner cable 73 can be exerted, from the fixing unit 81 of the cable end 73a. In the fourth embodiment, for example, the position is defined as a position at a distance of about half round (about 180 degrees) along the winding groove portion 71a from the fixing unit 81.

The designated regulatory member is regulatory member 83, provided to the inner cable 73, and ties up the inner cable 73 at a contact position with respect to the winding groove 71a. The regulatory member 83 has a ring member 83a for tying up the entire circumference of the inner cable 73, and a fixing pin member 83c connected to the ring member 83a via a coupling member 83b. The coupling member 83b, and the fixing pin member 83c are set in the pulley 71, by being inserted into the end face of the pulley 71 from the direction of the rotary shaft L. Here, the ring member 83a is fixed to a predetermined position of the inner cable 73 by, for example, casting, caulking and/or other means know to persons having ordinary skill in the art. In addition, an insertion hall 83d for the coupling member 83b and the fixing pin member 83c is formed to the pulley 71. It will be understood that the other configurations of this embodiment are similar to those of the third embodiment, and therefore a separate description here will be omitted in favor of the previous description.

Description will be given to an assembly operation and an operation of preventing an inner cable from lifting according to the cable end supporting structure A2 of the fourth embodiment.

The inner cable 73 is assembled onto the pulley 71 in the following manner. Pin 81a, fixed to the cable end 73a, is fixed to the pin hall 81b formed at the end face of the pulley 71, and thereafter, the inner cable 73 is wound along the winding groove 71a formed on the outer periphery of the pulley 71. The coupling member 83b and the fixing pin member 83c of the regulatory member 83, to which the ring member 83a is fixed in advance at a position at a predetermined length from the cable end 73a, are inserted into the insertion hall 83d formed at the end face of the pulley 71 from the direction of the rotary shaft L. According to the above-described assembly, the regulatory member 83 provides an effect that the inner cable 73 is tied up at a position at which the inner cable 73 is made to abut on the winding groove 71a. That is at a position at which the inner cable 73 is wound to a minimum, and is regulated from lifting from the winding deep groove portions 71a'.

The inner cable 73 is wound around the pulley 71, or relaxed from the pulley 71 by rotation to the left and right of the pulley 71, which freely rotates in subordination to the steering wheel 6. When steering wheel 6 is at a left or right maximum rotational position the inner cable 73, at the relaxing side, is wound around the pulley 71 only up to a position of the number of winding the inner cable to a minimum (half round of the pulley) from the fixing unit 81 of the cable end 73a. Accordingly, even if the steering wheel 6 reaches a maximum rotational position, the regulatory member 83 ensures that the inner cable 73 is wound around the pulley 71 always halfway or more around of the pulley and it is generally possible to prevent the inner cable 73 from lifting from the winding groove 71a.

In addition, the inner cable 73 is prevented from lifting. As a consequence, it is also generally possible to prevent the inner cable 73, from failing to be wound around the pulley 71, by the rotation of the pulley 71 rotating to the opposite direction. As a result of the inner cable 73 being prevented from lifting, it is possible to prevent the inner cable 73 from being damaged. This, for example, is because the inner cable 73 contacts the inner face of the pulley casing 75 of the pulley 71.It is also possible, thereby, to prevent the inner cable 73 from failing to be wound along the winding groove 71a of the pulley 71.

Moreover, in the above-described case, frictional force applied between the inner cable 73 and the winding groove 71a supports the tensile force of the inner cable 73 at the relaxing side that is from the fixing unit 81 of the cable end 73a up to a position of the number of winding the inner cable to a minimum (half round of the pulley). As a result, excessive loads are not applied on the inner cable 73, the pin 81a of the cable end 73a, and the pin hall 81b of the pulley 71, which averts the deterioration and thereby promotes the durability of the inner cable 73 and the pulley 71.

The regulatory member 83 comprises the ring member 83a, the coupling member 83b, and the fixing pin member 83c. Thus, the regulatory member 83 has sufficient supporting intensity to prevent the inner cable 73 from lifting by frictional force. It will be seen that this is accomplishes by the ring member 83a and caulking or the like of the inner cable 73, as well as bearing power, by which the coupling member 83b and the fixing pin member 83c are fixed into the insertion hall 83d of the pulley 71 with respect to the tensile force of the inner cable 73.

As described above, in the cable-type steering device of the fourth embodiment, the regulatory member 83 is provided to the inner cable 73, and the inner cable 73 is tied up at a contact position with respect to the winding groove 71a by the regulatory member 83. For example, if the regulatory force, allowing the inner cable to abut on the winding groove by the regulatory member, is weak it is generally impossible to prevent the inner cable from lifting out of a winding groove, in the case where there is an excessive input over the regulatory force of an inner cable. In contrast thereto, in the fourth embodiment, the regulatory member 83 ties up the inner cable 73, at a contact position with respect to the winding groove 71a and achieves regulatory performance higher than that of the regulatory member 82 of the third embodiment. Thus, the regulatory member 83 can certainly prevent the inner cable 73 from lifting out of the winding groove 71a even if there is an excessive input from the inner cable 73.

In the cable-type steering device of the fourth embodiment, the regulatory member 83 has the ring member 83a for tying up the inner cable 73. For example, when a part of the inner cable is tied up, the binding force of the inner cable can deteriorate. Further, when the regulatory member is a pin member as in the third embodiment, it is impossible to avoid local friction with the inner cable. In contrast thereto, in the fourth embodiment, the provision of the ring member 83a, for tying up the inner cable 73, makes it possible to exert high binding force and to avoid local friction with the inner cable 73.

In the cable-type steering device of the fourth embodiment, the regulatory member 83 has ring member 83a, and the fixing pin member 83c connected to the ring member 83a via the coupling member 83b, and the coupling member 83b.Additionally, the fixing pin member 83c is set in the pulley 71 by being inserted into the end face of the pulley 71 from the direction of the rotary shaft L. For example, when a regulatory member is fixed to a pulley by screw clamp or the like, it takes a number of man-hours for assembly, which decreases assembling efficiency. Further, when the regulatory member is a pin member as in the third embodiment, the shape of the winding groove of the pulley must be changed. In contrast thereto, in the fourth embodiment, it is possible to set the regulatory member 83, with high assembling efficiency, by merely inserting it from the end face of the pulley 71. It is then possible to apply the regulatory member without requiring a change in the shape of the winding groove 71 a of the pulley 71.

The automotive steering device of the present invention has been described above on the basis of the first to fourth embodiments. However, it will be understood that the present invention is not limited to these embodiments, and that modifications, additions, and the like in the design are allowed within a range which does not deviate from the novel scope of the present invention relating to the respective claims below.

As described, the first embodiment is an example wherein the mechanical clutch unit is provided to the inner ring, rotating along with the operating device, with the lesser change in a rotation angle as between the operating device and the rotary steering device. However, in some cases, the element with the lesser change in a rotation angle is the rotary steering device, or a rotating member having a mechanical clutch unit is an outer ring. In such a case, the mechanical clutch unit may be provided to the outer ring, rotating along with the rotary steering device with the lesser change in a rotation angle. In brief, the present invention includes any device in which engaging means is provided to the rotating member, rotating along with a device, that has the lesser change in a rotation angle between the operating device and the rotary steering device.

As described in the first embodiment the configuration is where the permanent magnet 36 is arranged in the field of the electromagnetic coil 35 as excitation means. However, this may be configured such that the biasing spring 38 is arranged between the inner ring 31 and the armature 39, and only the electromagnetic coil 35 serves as excitation means. In brief, configuration is made so as to establish a clutch release state in which the outer ring 30 and the inner ring 31 are allowed to relatively rotate in operation of the excitation means, and to establish a clutch engagement state in which the rollers 32 are wedge-engaged between the outer ring 30 and the inner ring 31 during non-operation of the excitation means. With this configuration, it is possible to satisfy simultaneously the two performances required of the backup clutch 9 of the SBW system, that is, performance for insuring fail safe by engaging the clutch during power-OFF, and for reducing the play at small/large torque and during engagement.

As described in the third embodiment the cable end supporting structure, that is the regulatory member 82, is arranged opposite in the outer diameter direction at a position at a distance corresponding to a cable diameter from the winding groove, and the inner cable 73 is made to abut-on so as to be trapped-in, the winding groove 71a by the regulatory member 82. In addition, the fourth embodiment describes the cable end supporting structure, in the example above, the regulatory member 83 is provided to the inner cable 73, and the inner cable 73 is tied up at a contact position with respect to the winding groove 71a by the regulatory member 83. However, the regulatory member of the present invention is not limited to these regulatory members. In brief, the present invention includes any device in which a regulatory member is provided at a position at a distance of half round (about 180 degrees)of the pulley along a winding groove from a fixing unit of a cable end, and an inner cable is made to abut on the winding groove by the regulatory member. This is true even for a device configured by a regulatory member other than those of the third and fourth embodiments. Persons having ordinary skill in the art will recognize that other equivalents are included herein and that no limitations are implied.

The first to fourth embodiments, above, have described examples of applications to a steer-by-wire system in which a backup clutch is set at the rotary steering side. However, the invention can also be applied to a steer-by-wire system in which a backup clutch is set at the operating side. Further, the first and second embodiments have described the examples of applications to a steer-by-wire system in which both a cable column and a backup clutch are used as a backup device. However, the invention can be also applied to a steer-by-wire system in which a column shaft is used in place of a cable column, and only a backup clutch is provided as a backup device.

In the third and fourth embodiments, the examples given of the cable-type steering devices, which are applied as a backup mechanism of a steer-by-wire system, have been shown. However, the invention can be applied to a steering system in which a cable is used as a steering force transmission system in place of a column shaft, or the like, in order to increase the degree of freedom in a relative position or handling between a steering wheel and a steering mechanism. In brief, the present invention can be applied to any cable-type steering device that has a cable end supporting structure for supporting a cable end of an inner cable onto a cylindrical member, and that winds up the inner cable along a winding groove formed on the outer circumference of the cylindrical member, when the cable end rotates centering on the rotary shaft of the cylindrical member which supports it.

This application claims priority from Japanese Patent Application No. 2005-347599, filed 1st December 2005, the contents of which are expressly incorporated herein by reference.

## Claims

1. An apparatus for steering at least one wheel of a vehicle comprising:
operation means operable by a driver;
rotary-steering means for rotating the at least one wheel; and
engagement means for mechanically engaging and releasing the operation means and
the rotary-steering means;
wherein the engagement means comprises:
a first rotating member arranged to rotate with the operation means when the operation means and the rotary-steering means are mechanically released;
a second rotating member arranged to rotate with rotary-steering means when the operation means and the rotary-steering means are mechanically released;
and
engagement elements disposed between the first and second rotating members for selectively engaging and releasing the first and second rotating members.

2. An apparatus as claimed in claim 1 comprising excitation means for generating a magnetic force, wherein the engagement elements are arranged to selectively engage and release the first and second rotating members in dependence on the magnetic force.

3. An apparatus as claimed in claim 1 or claim 2 comprising:
an operating unit operable by the driver;
a rotary steering unit for rotating the at least one wheel based on a movement of the operating unit;
a clutch for mechanically engaging and releasing the operating unit and the rotary steering unit, the clutch including:
an inner ring connected to one of the operating unit and the rotary steering unit;
an outer ring connected to the other of the operating unit and the rotary steering unit; and
engagement elements provided between the inner ring and the outer ring for selectively engaging and releasing the inner and outer rings.

4. An apparatus as claimed in claim 4 wherein the engagement elements are arranged to release the inner ring and the outer ring when a relative rotational speed therebetween falls below a predetermined value.

5. An apparatus as claimed in claim 3 or claim 4 wherein the clutch further includes an electromagnetic coil which operates the engagement elements, the outer ring has an inner periphery formed in a cylindrical shape, the inner ring has an outer periphery formed in a cam shape and the operating unit and the rotary steering unit are arranged to be released in such a manner that the outer ring and the inner ring are allowed to relatively rotate by retaining the engagement element at a neutral position on the basis of an operation by the electromagnetic coil and the operating unit and the rotary steering unit are engaged in such a manner that the outer ring and the inner ring are engaged by the engagement element due to the engagement element coming off from the neutral position on the basis of an operation by the electromagnetic coil.

6. An apparatus as claimed in any of claims 3 to 5 comprising a rotor fixed to an end position of the outer ring, the rotor having a permanent magnet arranged in a field of the electromagnetic coil and wherein the clutch comprises:
an armature arranged to be movable in an axial direction of the rotor via a biasing spring with respect to the rotor,
a plurality of engagement elements, in roller form, inserted between the outer ring and the inner ring, and
a ball-cage, for embedding the plurality of engagement elements into pockets and maintaining spaced intervals among the plurality of engagement elements.

7. An apparatus as claimed in any of claims 3 to 6 wherein the clutch comprises a neutral spring for retaining the engagement elements at a neutral position in a state that the rotary steering unit is released from the operating unit.

8. An apparatus as claimed in claim 6 or claim 7 comprising bearings disposed between a shaft member fitted into the inner ring in a serration manner and the rotor fixed to the end position of the outer ring.

9. An apparatus as claimed in any of claims 3 to 8 comprising a cable column disposed between the operating unit and the clutch, the cable column comprising cylindrical members respectively provided to the operating unit and the clutch, and an inner cable, bridged between the cylindrical members, for transmitting rotation of one of the cylindrical members to the other.

10. A method of steering an automobile on the basis of an operation of a driver, comprising the steps of:
providing an operating unit operable by the driver;
providing a rotary steering unit for rotating the steering control wheels based on the movement of the operating unit;
providing a clutch, between the operating unit and the rotary steering unit to mechanically engage and release the operating unit and the rotary steering unit, wherein, the clutch includes; a first rotating member interlinked with the operating unit; a second rotating member interlinked with the rotary steering unit; and engagement elements provided between the first rotating member and the second rotating member to engage and release the first rotating member and the second rotating member; and
respectively rotating the first rotating member along with the operating unit and the second rotating member along with the rotary steering unit;

11. A method as claimed in claim 10 comprising arranging the engagement elements to release the first and second rotating members when a relative rotational speed therebetween falls below a predetermined value.

12. A vehicle having an apparatus or adapted to use a method as claimed in any preceding claim.
